# EUROPÄISCHE PATENTSCHRIFT

(11) **EP 0 636 559 B1**
(45) Veröffentlichungstag und Bekanntmachung des Hinweises auf die Patenterteilung: **30.10.1996**
(21) Anmeldenummer: 94107583.0
(22) Anmeldetag: 17.05.1994
(51) Int. Cl.: B65G 15/02, B65G 23/16

(54) **Kurvenförderer**
Curved belt conveyor
Transporteur à bande courbe

(30) Priorität: 29.07.1993 DE 4325477
(43) Veröffentlichungstag der Anmeldung: 01.02.1995
(73) Patentinhaber: IBF FÖRDERTECHNIK IRMHILD HELGA FLOHR-CLEMENS, 63825 Blankenbach (DE)
(72) Erfinder: Clemens, Horst G., Dipl.-Ing., D-63825 Blankenbach (DE)
(74) Vertreter: Pöhner, Wilfried Anton, Dr.

(56) Entgegenhaltungen:
- EP-A- 0 011 962
- EP-A- 0 128 378
- DE-A- 2 740 807
- DE-A- 2 817 958
- DE-A- 4 113 051
- DE-B- 2 343 249
- DE-B- 2 723 033
- DE-C- 883 950
- DE-U- 7 219 379
- GB-A- 888 112

## Beschreibung

Die Erfindung bezieht sich auf einen Kurvenförderer mit einem Endlosgurt, zwei zu seiner Umlenkung dienenden Walzen, einem auf der Innenseite des Endlosgurtes befestigten Zahnriemen als Antriebsmittel, einer Führungseinrichtung, die im konstanten Abstand zum Zahnriemen verläuft, an der Innenseite des Endlosgurtes fixiert ist, und daran ablaufende Rollen aufweist, und einem Gestell.

Kurvenförderer werden im Rahmen der automatisierten Produktion eingesetzt, falls sich aus räumlichen Gründen ein Veränderung der Transportrichtung um einen horizontalen Winkel als erforderlich erweist. In relativ einfach gestalteten Kurvenförderern finden konische, auf der Innenseite eines Endlosgurtes angeordnete Walzen Verwendung. Als nachteilig ist anzusehen, daS dem jeweiligen Umlenkwinkel angepaßte Walzen herzustellen sind, so daß keine rationelle Fertigung in hohen Stückzahlen möglich ist und sich die Gestehungskosten relativ hoch gestalten.
Eine andere Möglichkeit besteht in der Montage von Ketten, die in der Nähe des Gurtrandes außerhalb, d.h. ober- und unterhalb des Endlosförderers umlaufen und über Mitnehmer mit dem Gurt verbunden sind. Aufgrund der mit zunehmender Benutzungsdauer unabdingbaren Längung der Kette erweist sich häufig eine kosten- und personalintensive Unterbrechung der Produktion und Reparatur als notwendig; weiterhin ist die zum Transport von Gegenständen verwendbare Gurtfläche durch die Kette entscheidend reduziert.
Aus der DE-A-27 40 807 ist ein Kurvenförderer gattungsgemäßer Art bekannt, bei dem der Antrieb des Endlosgurtes über einen auf seiner Innenseite befestigten Zahnriemen erfolgt. Zur Führung des Gurtes dienen um horizontale Achsen drehbare Rollen, die am Zahnriemen oder einem anderen, am Gurt angebrachten Anschlag anliegen und die Kurvenkrümmung bestimmen. Der Nachteil besteht darin, daß sich aufgrund der starren Fixierung der Rollen am Gurt eine hohe Präzision der Führungsschienen als notwendig erweist und daß ein Atmen des Endlosförderers, d.h. Ausgleich eventueller Toleranzen, Verformungen oder Belastungen nicht möglich ist. Zudem wird der Zahnriemen zur Vermeidung eines übermäßigen Verschleißes seitlich an den Umlenkwalzen vorbei und ansonsten unter einer randseitigen Abdeckung des Gurtes geführt. Somit ist auch hier nur ein Teil der Gurtbreite zum Transport nutzbar, was insbesondere bei solchen Gegenständen Probleme bereitet, deren Breite die des Gurtes übersteigt.

Ferner zeigt die Druckschrift DE-B-27 23 033 einen kurvenförderer, dessen Fördergurt durch an der Innenkante der Gurtkurve angeordnete Rollen mit sendrecht zur Gurtoberfläche ausgerichteten Drehachsen geführt wird. Zur Verbesserung der Führung umgreifen die Rollen die Gurtkante und sind durch eine bezüglich der Kurve radial nach außen wirkende Federkraft beaufschlagt, so daß sich die notwendige Präzision bei der Fertigung sowie der Wartungsaufwand verringern. Als nachteilig erweist sich jedoch, daß die Rollen über die Oberfläche des Fördergurtes hervorstehen und damit die maximale Förderbreite begrenzen.

Ausgehend vom Stande der Technik liegt der Erfindung das Problem zugrunde, einen Kurvenförderer zu schaffen, der sich durch lange Lebensdauer, hohe Transportgeschwindigkeit und -kapazität sowie Preiswürdigkeit auszeichnet und bei dem die gesamte Gurtbreite zur Förderung zur Verfügung steht.

Erfindungsgemäß wird das Problem dadurch gelöst, daS die Walzen mit jeweils einem Zahnring versehen sind, der mit dem Zahnriemen im Eingriff steht, daß die Führungseinrichtung ein Profilgurt ist, in den die Rollen formschlüssig eingreifen, und daß die Rollen am Gestell um eine parallel zur Oberflächennormale des Endlosgurts verlaufende Achse drehbar befestigt, mit einer radial nach außen gerichteten Kraft beaufschlagt und radial beweglich sind.

Der Kerngedanke der Erfindung besteht darin, die zur Führung und zum Antrieb des Endlosgurtes dienenden Elemente auf seiner Innenseite anzuordnen. Die Übertragung des Antriebsmoments auf den Endlosgurt erfolgt durch einen auf seiner Innenseite befestigten, in konstanter Entfernung von seiner Berandung umlaufenden Zahnriemen. Die stirnseitig positionierten, zur Umlenkung des Endlosgurtes um jeweils 180° dienenden Walzen sind mit je einem im Eingriff mit dem Zahnriemen stehenden Zahnring versehen, der eine Drehmomentübertragung von der Walze auf den Gurt oder in umgekehrter Richtung ermöglicht. Der Antrieb kann durch eine der Walzen oder ein an beliebiger Position montiertes, in den Zahnriemen eingreifendes Zahnrad erfolgen, wobei eine geschützte Anbringung zwischen den Trums des Endlosgurtes bevorzugt ist. Zur Übertragung der nach innen gerichteten, auf den Endlosgurt als Folge seiner in radialer Richtung variierenden Geschwindigkeit wirkenden Kräfte auf das stationäre, den gesamten Kurvenförderer tragende Gestell ist eine Führungseinrichtung vorgesehen, die aus einem in konstantem Abstand vom Zahnriemen - und somit von der Berandung des Endlosgurts -fixierten, umlaufenden Profilgurt und daran ablaufenden, vorzugsweise äquidistant über die Kurve verteilten Rollen aufgebaut ist. Die Rollen sind um eine parallel zur Oberflächennormalen des Endlosgurtes verlaufende Achse drehbar am Gestell gelagert und, damit sie eventuellen Toleranzen, Belastungen und Verformungen selbsttätig ausweichen können, mit einer radial nach außen wirkenden Kraft, vorzugsweise einer Federkraft beaufschlagt. Eine weitere Aufgabe der Führungseinrichtung besteht darin, die vertikalen, durch das Transportgut bedingten Belastungen vom Endlosgurt auf das Gestell zu übertragen.

Die Vorteile der Erfindung bestehen vornehmlich darin, daß die gesamte Gurtbreite, aufgrund der Tatsache, daß die Antriebs- und Führungselemente zwischen dem hin- und rücklaufenden Trum positioniert sind, als Förderbreite zur Verfügung steht, wobei auch Gegenstände mit Überbreite, also die Gurtbreite überschreitenden lateralen Abmessungen transportierbar sind. Die Verwendung eines Zahnriemens erlaubt, auf bewegte metallische Teile zu verzichten, so daß die Laufruhe und erzielbare Transportgeschwindigkeit gegenüber bekannten Kurvenförderern entscheidend gesteigert werden kann. Eine Reparatur und/oder ein Austausch defekter Antriebselemente ist nach einer Entfernung des Endlosgurtes unschwer möglich. Kommt ein Zahnriemen ohne Verstärkungsfasern zum Einsatz, tritt die mit zunehmender Benutzungsdauer unweigerlich auftretende Längung bei Endlosgurt und Zahnriemen in näherungsweise gleichem Maße auf; ein durch unterschiedliche Längung bedingtes Ablösen kann somit leicht unterbunden werden. Schließlich ist anzumerken, daß sich wegen der formschlüssigen Antriebsmomentübertragung auf den Zahnriemen erübrigt, den Endlosgurt oder den Zahnriemen zu spannen, so daß keine übermäßige Längung und unnötige Reduzierung der Lebensdauer des Kurvenförderers zu befürchten ist.

Kommen wälz-, d.h. kugel-, rollen- oder nadelgelagerte Rollen zum Einsatz, können die in radialer und vertikaler Richtung verlaufenden, vom Profilgurt auf die Rollen übertragenen Kräfte ohne unnötige Reibung und Geräusche auf das Gestell weitergeleitet werden.

Die Form der stirnseitig am Kurvenförderer gelagerten, den Endlosgurt umlenkenden Walzen ist im Rahmen des erfindungsgemäßen Gedankens beliebig. Eine konische Dimensionierung erlaubt zwar die Verwendung einteiliger Walzen; als nachteilig ist jedoch anzusehen, daß ihre Konizität in unmittelbarem Zusammenhang mit der Krümmung des Kurvenförderers steht und daß somit keine standardisierte, preisgünstige Produktion möglich ist. Bei alternativ einzusetzenden, zylindrischen Walzen ist zu berücksichtigen, daß die Geschwindigkeit des an ihnen anliegenden Endlosgurtes mit der (auf die Walze bezogen) axialen Position variiert, so daß die Walzen zur Unterbindung des als Folge der Friktion entstehenden Abriebs axial in separat drehbar gelagerte Abschnitte zu unterteilen ist.

Aufgrund der leichten und schnellen Fertigung ist empfehlenswert, den Zahnriemen und/oder den Profilgurt auf den Endlosgurt aufzukleben. Falls geeignete Klebstoffe Verwendung finden, ist die Belastbarkeit mit einer Löt- oder Schweißverbindung vergleichbar. Ungeachtet dessen käme auch eine Schweiß- oder Nahtverbindung zusätzlich oder als Alternative in Betracht.

Im speziellen ist eine Montage des Zahnriemens in der Nähe des radial äußeren Randes des Endlosgurtes bevorzugt, da sich zum einen der Abrieb wegen der Länge des Zahnriemens auf eine hohe Anzahl von Zähnen verteilt und die Lebensdauer somit verlängert ist, zum anderen auf den Endlosgurt keine durch das Antriebsmoment bedingten, radial nach innen gerichteten Stauchungskräfte wirken.

Zahnriemen sind zur Aufnahme der Zugbelastungen mit Verstärkungen, z.B. aus Stahl oder Kevlar versehen. Da die Übertragung der Zugkräfte über den Gurt möglich ist und erfolgt, kann der Zahnriemen frei von Verstärkungen bleiben. Er wird somit preisgünstiger herstellbar.

Der Querschnitt des Profilgurts wird vorteilhafterweise T-, U- oder winkelförmig gewählt. Der Vorteil besteht darin, daß auch größere vertikale und radial nach innen gerichtete Kräfte durch die formschlüssige Verbindung auf die Rollen übertragen werden können. Bei der konkreten Dimensionierung ist zu berücksichtigen, daß kleine Walzenradien nur bei Profilgurten mit geringer Stärke verwendbar sind.

Um nur noch einen einzigen Riemen auf den Endlosgurt aufbringen zu müssen, bietet sich an, ein Profil in die radial innere Flanke des Zahnriemens einzubringen und als Profilgurt einzusetzen.

Zum Antrieb des Zahnriemens ist im konkreten ein Doppelzahnriemen empfohlen, dessen innere Zahnreihe mit zwei im Abstand voneinander montierten Zahnrädern mit parallelen Achsen im Eingriff steht. Das Antriebsmoment wirkt auf eines der Zahnräder und wird durch einen Trum des Doppelzahnriemens, der näherungsweise parallel zur Tangente des Zahnriemens verläuft, auf letzteren übertragen. Wegen der durch die Krümmung des Endlosgurtes bedingten Biegung des Zahnriemens weisen benachbarte Zähne einen in Bewegungsrichtung nach außen ansteigenden relativen Abstand und/oder Breite auf. Die Zähne des Doppelzahnriemens verlaufen hingegen orthogonal zur Tangente und sind nicht gekrümmt. Als Vorzug ist anzusehen, daß der Antrieb an einer beliebigen Position zwischen dem hin- und rücklaufenden Trum des Endlosgurtes montierbar ist.

Weitere Einzelheiten, Merkmale und Vorteile der Erfindung lassen sich dem nachfolgenden Beschreibungsteil entnehmen, in dem anhand der Zeichnungen eine Ausführungsform der Erfindung näher erläutert wird. Sie zeigen in schematischer Darstellung in
- Figur 1: eine Teilansicht eines geöffneten Kurvenförderers
- Figur 2: eine Gesamtansicht eines Kurvenförderers

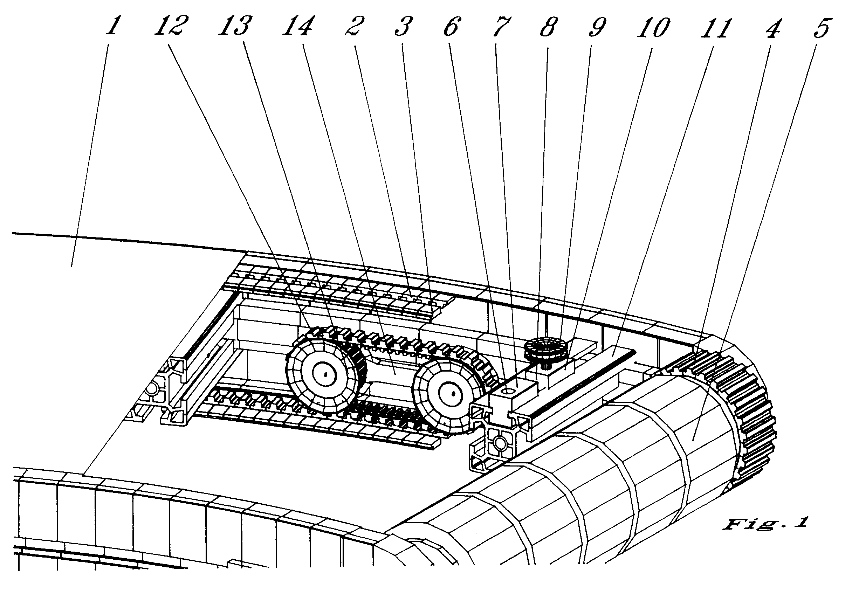

Der in Figur 1 dargestellte Kurvenförderer besteht in seinem grundsätzlichen Aufbau aus einem Endlosgurt (1), zwei stirnseitig gelagerten, seiner Umlenkung dienenden Walzen (5), von denen in Figur 1 nur eine erkennbar ist, sowie Antriebs- und Führungselementen. Das vorzugsweise von einem Elektromotor erzeugte Drehmoment wird über ein Zahnrad (13) auf die innere Zahnreihe eines Doppelzahnriemens (12), der mit einem zweiten, mittels eines Distanzhalters (14) im Abstand positionierten Zahnrad im Eingriff steht, übertragen. Die Zahnreihe des Doppelzahnriemens (12) interagiert mit einem auf dem Endlosgurt (1) fixierten Zahnriemen (2). Die Walze (5) ist nahe ihrer radial äußeren Stirnseite mit einem Zahnring (4) zur Aufnahme des Zahnriemens (2) versehen und in separat drehbare Abschnitte untergliedert. Zur Führung des Endlosgurtes (1) und zur Übertragung der radial nach innen gerichteten sowie der durch das Transportgut entstehenden, vertikal nach unten verlaufenden Kräfte auf das am Boden fixierte Gestell (15) ist der Endlosgurt (1) mit einem Profilgurt (3) versehen, an dem eine Rolle (9) anliegt und um eine vertikale Achse rotiert. Um die Rolle (9) mit einer radial nach außen gerichteten Kraft zu beaufschlagen, ist sie auf einem Rollenträger (10) montiert, der seinerseits über eine Feder (8) mit einem Kalter (7) verbunden ist. Letzterer ist, nachdem eine Schraube (6) gelöst ist, ebenfalls in radialer Richtung verschiebbar. Mehrere Profilträger (11) mit daran montierten Rollen (9) sind äquidistant über den gesamten Kurvenförderer verteilt.

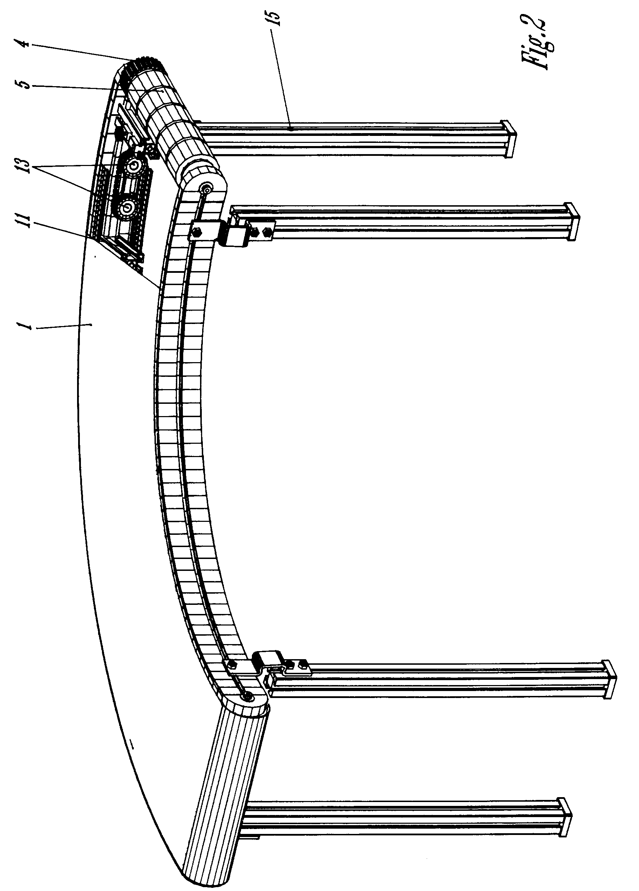

In Figur 2 ist erkennbar, daß sich die Profilträger (11) sowie die übrigen Führungs- und Antriebselemente durch eine äußere Abdeckung und das Gestell (15) auf dem Boden abstützen.

Im Ergebnis erhält man einen Kurvenförderer, der sich durch eine lange Betriebszeit, hohe Transportgeschwindigkeit und Förderkapazität sowie Laufruhe auszeichnet.

## Patentansprüche

1. Kurvenförderer mit einem Endlosgurt, zwei zu seiner Umlenkung dienenden Walzen, einem auf der Innenseite des Endlosgurtes befestigten Zahnriemen als Antriebsmittel, einer Führungseinrichtung, die im konstanten Abstand zum Zahnriemen verläuft, an der Innenseite des Endlosgurtes fixiert ist, und daran ablaufende Rollen aufweist, und einem Gestell, **dadurch gekennzeichnet,** daß die Walzen (5) mit jeweils einem Zahnring (4) versehen sind, der mit dem Zahnriemen (2) im Eingriff steht,
daß die Führungseinrichtung ein Profilgurt (3) ist, in den die Rollen (9) formschlüssig eingreifen, und daß die Rollen (9) am Gestell (15) um eine parallel zur Oberflächennormale des Endlosgurts (1) verlaufende Achse drehbar befestigt, mit einer radial nach außen gerichteten Kraft beaufschlagt und radial beweglich sind.

2. Kurvenförderer nach Anspruch 1, **gekennzeichnet durch** wälzgelagerte Rollen (9).

3. Kurvenförderer nach Anspruch 1 oder 2, **dadurch gekennzeichnet,** daß die Walzen (5) axial in separat drehbar gelagerte Abschnitte unterteilt sind.

4. Kurvenförderer nach Anspruch 3, **gekennzeichnet** **durch** zylindrische Walzen (5).

5. Kurvenförderer nach einem der Ansprüche 1 bis 4, **dadurch gekennzeichnet,** daß der Zahnriemen (2) und/oder der Profilgurt (3) auf den Endlosgurt (1) aufgeklebt und/oder geschweißt und/oder genäht sind.

6. Endlosförderer nach einem der Ansprüche 1 bis 5, **dadurch gekennzeichnet,** daß der Zahnriemen (2) in der Nähe des radial äußeren Randes des Endlosgurtes (1) fixiert ist.

7. Endlosförderer nach einem der Ansprüche 1 bis 6, **dadurch gekennzeichnet,** daß der Zahnriemen (2) frei von Verstärkungseinlagen ist.

8. Endlosförderer nach einem der Ansprüche 1 bis 7, **dadurch gekennzeichnet,** daß der Querschnitt des Profilgurts (3) T-, U- oder winkelförmig ist und eine in vertikaler Richtung formschlüssige Verbindung mit den Rollen (9) erfolgt.

9. Endlosförderer nach einem der Ansprüche 1 bis 8, **gekennzeichnet durch** ein in die radial innere Flanke des Zahnriemens (2) eingebrachtes Profil als Profilgurt (3).

10. Kurvenförderer nach einem der Ansprüche 1 bis 9, **dadurch gekennzeichnet,** daß der Zahnriemen (2) durch einen endlosen Doppelzahnriemen (12) angetrieben wird, wobei zwei im Abstand voneinander montierte Zahnräder (13) mit parallelen Achsen im Eingriff mit der inneren Zahnreihe des Doppelzahnriemens (12) stehen, eines der Zahnräder (13) mit einem Antrieb verbunden ist, und die äußere Zahnreihe eines Trums des Doppelzahnriemens (12) in den Zahnriemen (2) eingreift.

## Claims

1. Cam conveyor having an endless belt, two pulleys used to deflect it, a toothed belt affixed to the inside of the endless belt as drive means, a guide device, which extends at a constant distance to the tooth belt, is affixed to the inside of the endless belt, and has rollers that run thereupon, and a mounting, **wherein** said pulleys (5) respectively are provided with a toothed ring (4), which engages with said toothed belt (2),
that said guide device is a profile belt (3) with which rollers (9) engage in a form-fit manner,
and that said rollers (9) are affixed to said mounting (15) so as to pivot about an axis that extends parallel of normal to surface of said endless belt (1), are impinged by a force that is directly radially outwards, and are movable radially.

2. Cam conveyor according to claim 1, **wherein** there are rolling-bearing mounted rollers (9).

3. Cam conveyor according to claim 1 or 2, **wherein** said pulleys (5) are divided axially into separately pivoted sections.

4. Cam conveyor according to claim 3, **wherein** there are cylindrical pulleys (5).

5. Cam conveyor according to one of claims 1 to 4, **wherein** said toothed belt (2) and/or profile belt (3) are glued and/or welded and/or sewn to said endless belt (1).

6. Endless conveyor according to one of claims 1 to 5, **wherein** said toothed belt (2) is affixed proximate to the radially exterior edge of said endless belt (1).

7. Endless conveyor according to one of claims 1 to 6, **wherein** said toothed belt (2) is free of reinforcing strengtheners.

8. Endless conveyor according to one of claims 1 to 7, **wherein** the cross section of said profile belt (3) is T-shaped, U-shaped or angular and a form-fit connection is effected with said rollers (9) in a vertical direction.

9. Endless conveyor according to one of claims 1 to 8, **wherein** there is a profile inserted in the radially inner flank of said toothed belt (2) as said profile belt (3).

10. Cam conveyor according to one of claims 1 to 9, **wherein** said toothed belt (2) is driven by an endless double-toothed belt, whereby two toothed wheels (13), mounted at a distance to one another, with parallel axes, engage with the inner row of teeth of double-toothed belt (12), one of said toothed wheels (13) is connected to a drive, and the outer row of teeth of a strand of double-toothed belt (12) engages with toothed belt (2).

## Revendications

1. Transporteur curviligne avec une bande continue, deux rouleaux servant au changement de direction, une courroie dentée fixée dans la partie interne de la bande continue comme moyen d'entraînement, un dispositif de guidage monté à distance constante de la courroie dentée, fixé dans la partie interne de la bande continue et qui présente des galets qui tournent à son contact et d'un support **caractérisé en ce que** les rouleaux (5) sont munis chacun d'une couronne dentée (4) qui est en prise avec la courroie dentée (2),
que le dispositif de guidage est une courroie profilée (3) dans laquelle s'engrènent positivement le ou les galets, que les galets (9) sont fixés au support (15) de façon qu'ils tournent sur un axe paralléle à la normale de la surface de la bande continue (1) qu'ils sont soumis à une force radiale dirigée vers l'extérieur et qu'ils sont mobiles radialement.

2. Transporteur curviligne selon la revendication 1 **caractérisé par** des galets sur paliers à roulement (9).

3. Transporteur curviligne selon la revendication 1 ou 2 **caractérisé par le fait que** les rouleaux (5) sont divisés axialement en sections tournant séparément sur paliers.

4. Transporteur curviligne selon la revendication 3, **caractérisé par** des rouleaux (5) cylindriques.

5. Transporteur curviligne selon une des revendications 1 à 4 **caractérisé par le fait que** la courroie dentée (2) et/ou la courroie profilée (3) sont collées et/ou soudées et/ou cousues sur la bande continue (1).

6. Transporteur continu selon une des revendications 1 à 5 **caractérisé par le fait que** la courroie dentée (2) est fixée à proximité du bord radial extérieur de la bande continue (1).

7. Transporteur continu selon une des revendications 1 à 6 **caractérisé par le fait que** la courroie dentée (2) est exempte de tout élément de renfort.

8. Transporteur continu selon une des revendications 1 à 7 **caractérisé par le fait que** la section de la courroie profilée (3) est en T, en U ou angulaire et qu'un assemblage positif en direction verticale avec les galets (9) a lieu.

9. Transporteur continu selon une des revendications 1 à 8 **caractérisé par le fait qu'un** profil est apporté dans le flanc radial intérieur de la courroie dentée (2) qui sert alors de courroie profilée (3).

10. Transporteur curviligne selon une des revendications 1 à 9, **caractérisé par le fait que** la courroie dentée (2) est entraînée par une courroie dentée double (12) continue, deux roues dentées (13) montées à une certaine distance l'une de l'autre et ayant des axes parallèles étant en prise avec la rangée intérieure de la courroie dentée (12) que l'une des roues dentées (13) est reliée à un entraînement et que la rangée extérieure d'un brin de la courroie dentée double (12) s'engrène dans la courroie dentée (2).
